# DEMANDE DE BREVET EUROPEEN

(11) **EP 4 417 048 A1**
(43) Date de publication de la demande: **21.08.2024**
(21) Numéro de dépôt: 24154234.9
(22) Date de dépôt: 26.01.2024
(51) Int. Cl.: A01K 61/54, A01K 61/55

(54) **CONTENANTS A COQUILLAGES ET SUPPORTS DE SUSPENSION CORRESPONDANTS**

(30) Priorité: 27.01.2023 FR 2300798
(71) Demandeur: Fontenay, Benoît, 50660 Orval sur Sienne (FR); Lecouillard, Yohann, 50230 Agon-Coutainville (FR); Fontenay, Jorick, 50200 Heugueville sur Sienne (FR); Fontenay, Maël, 33260 La Teste de Buch (FR)
(72) Inventeur: Fontenay, Benoît, 50660 Orval sur Sienne (FR); Lecouillard, Yohann, 50230 Agon-Coutainville (FR); Fontenay, Jorick, 50200 Heugueville sur Sienne (FR); Fontenay, Maël, 33260 La Teste de Buch (FR)
(74) Mandataire: Vidon Brevets & Stratégie

(57) **Abrégé**

La divulgation concerne un contenant (1, 1') pour la culture de coquillages comprenant un maillage (11, 11') conformer de sorte à former un espace de réception (12) desdits coquillages. Selon l'invention, le contenant 1 porte un axe de rotation (105) dudit contenant (1, 1'). L'invention concerne également un support de suspension (2, 2', 2") configurée pour recevoir et maintenir lesdits contenants (1, 1').

## Description

### Domaine de la divulgation

Le domaine de la divulgation est celui de l'élevage de produits de la mer pouvant être élevés en surélévation ou en suspension. L'invention concerne tous types de cultures maritimes et plus particulièrement la pisciculture et donc la culture, l'élevage et la finition des huîtres.

Plus particulièrement, la divulgation concerne les équipements d'élevage de produits issus des cultures marines aquacoles, qu'elles aient lieu sur le domaine public maritime ou en milieu privé.

### Art antérieur

La méthode d'élevage d'huîtres la plus couramment employée en France et en Europe est dite méthode de « surélévation ». Cette méthode consiste à disposer des tables métalliques horizontales sur l'estran puis à mettre les huîtres dans des poches disposées sensiblement horizontalement sur les tables.

Bien que ces tables présentent un coût de fabrication relativement faible et qu'elles s'adaptent relativement facilement à tous les types de terrains, leur durée de vie n'excède pas 8 à 10 ans. Un autre inconvénient de ces tables est quelles sont relativement basses, obligeant l'utilisateur à adopter une position très inconfortable et traumatisante pour : détacher/attacher les poches, soulever et retourner les poches, et charger/décharger les poches sur une remorque ou un bateau. De plus, cette méthode met en oeuvre des poches conventionnelles globalement plates fabriquées en matière plastique. De façon connue, ces poches peuvent présenter des maillages de différentes dimensions pour s'adapter à la croissance des huîtres. Ces poches sont disposées sensiblement horizontalement sur des tables et sont fixées à ces dernières par des élastiques de fixation, également fabriqués en plastique.

Ces poches sont bien connues et massivement utilisées pour leur faible coût et leur faculté à pouvoir s'écraser facilement pour faciliter leur stockage à vide à terre. Néanmoins, ces poches classiques présentent l'inconvénient de ne pouvoir être posées qu'horizontalement. De plus, ces poches plates présentent un volume interne restreint empêchant un mouvement des huîtres dans la poche. Cela entraine un maillage des huîtres dans la poche nécessitant des secouages/remuages et des retournements fréquents des poches. Ces manoeuvres sont traumatisantes pour l'opérateur et relativement chronophages alors que le temps de travail en mer est limité, notamment par les marées.

Comme indiqué précédemment, la fixation des poches plates sur les tables met en oeuvre des élastiques de fixation qui se présentent sous la forme d'une bande élastique continue, par exemple. Ces bandes permettent une solidarisation et une désolidarisation relativement rapides des poches et pour un coût relativement faible, même si ce coût est de plus en plus élevé.

Un inconvénient de cette solution de fixation réside dans le fait que ces élastiques de fixation sont relativement fragiles, notamment aux coupures et aux ultraviolets. Ainsi, des poches sont régulièrement perdues, emportées lors des marées, lorsque des élastiques de fixation cassent. De plus, même lorsque ces élastiques ne cassent pas de manière accidentelle ou précipitée, leur durée de vie est relativement courte, ce qui oblige l'utilisateur à remplacer régulièrement ces élastiques sur les tables disposées en mer. Comme indiqué précédemment, ce type de manoeuvre est relativement chronophage alors que le temps de travail en mer est limité.

Pour résoudre au moins certains de ces inconvénients, une autre solution a été développée et consiste à mettre en oeuvre des paniers en plastiques rigides comprenant des clips qui permettent de fixer les paniers sur des axes fixes portés par la table. Autrement dit, les tables de suspension des paniers comprennent une rangée d'axes fixes, de préférence en acier inoxydable, sur lequel les paniers rigides sont accrochés. Cette solution est connue communément sous le nom de paniers « Australiens ».

Ces paniers rigides fixés sur des axes fixes portés par la table permettent une rotation automatique/naturelle des paniers au fil des marées et des vagues de sorte à secouer/remuer les huîtres dans les paniers et ainsi éviter une manipulation manuelle des paniers pour ces opérations. Toutefois, cette solution présente de nombreux inconvénients. Tout d'abord, afin d'obtenir des résultats de production d'huîtres satisfaisant, le nombre d'huîtres est sensiblement diminué par rapport aux techniques conventionnelles et nécessite des respecter une méthode stricte et contraignante de production des huîtres. En effet, cette solution requiert une faible densité d'huîtres dans les paniers, de l'ordre de 50 à 60 huîtres maximum par paniers, ce qui représente une diminution de la densité de plus de 50% par rapport à la technique conventionnelle des poches traditionnelles (également connues sous le nom de poches plates). Cette solution engendre donc une baisse de productivité non négligeable pour le producteur.

De plus, avec cette solution, le brassage des paniers peut être très violent, notamment lors des tempêtes. Ce brassage excessif entraine un fort taux de mortalité des huîtres ainsi qu'un aspect esthétique extérieur trop blanchi pouvant surprendre et déplaire les consommateurs.

Un autre inconvénient de cette solution réside dans le fait que les opérations de relevage sont relativement difficiles et contraignantes. En effet, les clips de fixation des paniers sur les axes des tables sont relativement durs à écarter afin de les extraire de leurs axes, notamment lorsque des coquillages se sont incrustés sur les clips ou sur l'axe et empêchent donc la désolidarisation.

Un autre inconvénient de cette solution réside dans le fait que ces paniers, sensiblement de forme cubique, présentent des dimensions relativement importantes et donc un encombrement élevé par rapport aux paniers plats conventionnels. Ces dimensions nécessitent un nombre important de remorques ou de bateaux lors du relevage des paniers, pour un poids net d'huîtres remonté relativement faible compte tenu de la faible densité d'huîtres dans chaque panier. Cette faible densité entraine également un nombre plus élevé d'opérations de vidage des paniers dans les machines de tri pour la récolte d'un nombre d'huîtres identique.

En outre, il est à noter que ces paniers rigides présentent le même encombrement à vide et en utilisation. Par conséquent, leur stockage à terre nécessite un espace et des moyens de manutention conséquents. De même, les parcs en mer doivent être étendus pour produire un nombre d'huîtres identique à la technique conventionnelle des paniers plats, ou bien la production doit être diminuée, ce qui n'est pas satisfaisant.

Pour finir, cette solution présente également l'inconvénient de mettre en oeuvre de nombreux matériaux différents pour fabriquer les paniers ainsi que les tables, avec des durées de vie et des possibilités de recyclage différentes les uns des autres, ce qui engendre un impact environnemental important.

Une autre technique, connue communément sous le nom de « paniers tournants » (pour *«roll-bag»* en anglais), met également en oeuvre des paniers rigides qui présentent sensiblement les mêmes inconvénients que la technique des paniers australiens. Notamment, ces paniers rigides sont de grandes dimensions et sont donc difficiles à manipuler et à stocker. Ils sont également constitués de différents matériaux et notamment de plastique qui les rendent difficile à recycler.

Pour résumer, les techniques connues décrites précédemment ne sont pas satisfaisantes. Il existe donc un besoin de fournir une nouvelle solution d'élevage d'huîtres qui permettent, selon au moins certains des modes de réalisation de l'invention :
- d'améliorer la qualité du produit en optimisant la pousse des huîtres en termes de forme et de taille tout en augmentant le taux de chair de l'huître ; et
- de limiter et faciliter les opérations effectuées par les opérateurs de sorte à notamment faciliter l'accès à ces professions au personnel féminin notamment ; et/ou
- de produire des huîtres de façon durable en augmentant la durée de vie des installations en mer, de limiter l'utilisation de plastique et de caoutchouc en les remplaçant par des matériaux recyclables ou issus d'exploitation durable et responsable.

### Résumé de la divulgation

- Afin de résoudre les problèmes ci-dessus mentionnés, le demandeur. a mis au point un contenant pour la culture de coquillages comprenant un maillage conformé de sorte à former un espace de réception desdits coquillages, ledit contenant se présentant sous la forme d'une poche comprenant :
   - une enveloppe souple formant ledit maillage, ainsi
   - qu'une armature portant un axe de suspensions (constituant également un axe de rotation) dudit contenant et un cintre, ledit cintre étant disposé à l'intérieur de ladite enveloppe souple et étant configuré pour conformer l'enveloppe souple de sorte à former ledit espace de réception desdits coquillages au sein de l'enveloppe souple, et ledit cintre comprenant une embase rectiligne à partir de laquelle s'étend un élément en forme de U dont les montants latéraux sont courbés.

Le contenant selon l'invention intègre directement un axe de suspension (constituant un axe de rotation )permettant de disposer/suspendre le contenant sur une table de suspension. Cet axe de rotation/suspension permet au contenant d'une part, d'être maintenu de manière fiable sur la table de suspension, et d'autre part, de pivoter par rapport à la table de suspension, de manière automatique/naturelle au gré des marées, sans l'intervention d'un opérateur. Ainsi, les opérations de secouage manuelles ne sont plus nécessaires puisque les coquillages (par exemple des huîtres) sont secoués naturellement lors des marées grâce au contenant de l'invention.

Le cintre du contenant selon l'invention, dans lequel les montants latéraux sont courbés, permet de donner une forme ou du volume à l'enveloppe souple du contenant, de sorte à fournir un espace de réception des coquillages. Cet espace de réception, garanti par les montants courbés, permet un déplacement libre des coquillages (notamment de huitres) dans la poche, notamment lors de la rotation de la poche à huîtres. Par ailleurs, ces montants courbés sont configurés pour tout de même permettre à l'enveloppe souple de s'écraser pour assurer un empilement et un encombrement optimaux des poches lors du stockage à terre.

De manière avantageuse, ledit axe de rotation peut être fixé sur une surface extérieure dudit maillage et ledit axe de rotation est décalé par rapport à un plan comprenant le centre de gravité dudit contenant.

Un tel décalage des tiges circulaires, c'est-à-dire de l'axe de rotation de la poche, par rapport à l'enveloppe souple permet à la poche de tourner/pivoter, par rapport à la table de suspension, vers le haut et de se replacer/redescendre toujours par le même coté. Ainsi, la rotation des poches est mieux maîtrisée, même en cas de tempêtes. La mortalité des coquillages et en particulier des huitres est donc sensiblement réduite.

De manière avantageuse, l'axe de rotation peut comprendre au moins une tige circulaire formant l'axe de rotation de la poche à huîtres, la tige circulaire étant décalée par rapport à un bord extérieur de ladite enveloppe souple.

De manière avantageuse, l'armature peut être entièrement ou partiellement métallique et de préférence en acier inoxydable, et l'armature peut comprendre des moyens de fixation dudit axe de rotation avec le cintre, l'enveloppe souple étant disposée entre l'axe de rotation et le cintre.

En effet, l'acier inoxydable est un matériau particulièrement adapté aux contraintes d'une utilisation en mer et permet donc d'assurer une durée de vie importante à la poche à huîtres.

De manière avantageuse, le contenant selon l'invention peut comprendre au moins un flotteur fixé sur au moins une surface extérieure dudit maillage.

La mise en oeuvre d'un flotteur permet de faire tourner les contenants autour de l'axe de suspension afin de faire bouger les coquillages au sein du contenant, sans intervention de l'homme. Le flotteur est de préférence fixé sur l'extérieur du maillage de façon à permettre aux coquillages de rouler librement à l'intérieur du contenant. Le flotteur est de préférence amovible, de telle sorte qu'il est possible de le fixer ou non sur le contenant en fonction des périodes de l'année afin d'optimiser la croissance des coquillages.

La présente invention a également pour objet un support de suspension destiné à suspendre au moins un contenant selon l'invention tel que défini précédemment, ledit support de suspension (comprenant au moins quatre pieds disposés selon au moins deux rangées parallèles et deux barres supérieures s'étendant sensiblement parallèlement aux rangées parallèles, et les barres supérieures étant chacune portées par au moins deux pieds d'une même rangée, les barres supérieures comprenant au moins une paire de moyens de réception et de maintien disposées en vis-à-vis sur chacune des barres supérieures de manière à pouvoir recevoir l'axe de suspension d' un contenant selon l'invention, ledit support de suspension étant exempt de barre transversale au niveau des barres supérieures.

Un tel support de suspension, se présentant de préférence sous la forme d'une table de suspension, constitue une solution nouvelle et inventive de fixation des contenants capables de maintenir de manière fiable les contenants sur la table de suspension et d'autoriser une rotation maîtrisée des contenants par rapport à la table de suspension, de manière automatique/naturelle au gré des marées, sans l'intervention d'un opérateur. Ainsi, les opérations de secouage manuel ne sont plus nécessaires puisque les coquillages sont secoués naturellement lors des marées grâce à l'invention. Selon un premier mode de réalisation avantageux de la table de suspension selon l'invention, les barres supérieures peuvent être fabriquées en métal et les moyens de réception peuvent comprendre au moins un crochet soudé sur chacune des barres supérieures.

Une telle table de suspension comprenant des barres supérieures en métal est simple à mettre en oeuvre et garantit une bonne durabilité de la table. De plus, les crochets destinés à recevoir les axes de suspension des contenants peuvent y être fixés facilement par soudage. Cette solution est donc relativement simple à mettre en oeuvre.

Selon un deuxième mode de réalisation avantageux de la table de suspension selon l'invention, lesdites barres supérieures peuvent être fabriquées en bois et lesdits des moyens de réception comprennent au moins un crochet fixé sur chacune de barres supérieures.

Une telle table de suspension comprenant des barres supérieures en bois est simple à mettre en oeuvre et garantit une très bonne durabilité de la table. De plus, les crochets destinés à recevoir les axes de suspension des contenants peuvent y être fixés facilement, par vissage par exemple. Cette solution est donc relativement simple à mettre en oeuvre.

De manière avantageuse, la table de suspension, notamment conforme aux premier et deuxième modes de réalisation selon l'invention, peut comprendre des premiers moyens de verrouillage réversibles des contenants selon l'invention avec lesdits moyens de réception.

Ces premiers moyens de verrouillage réversibles permettent d'assurer un maintien fiable, voire sécurisé, de la poche, limitant ainsi les risques de perte de poches en mer, notamment lors des tempêtes.

Selon un troisième mode de réalisation avantageux de la table de suspension selon l'invention, lesdites barres supérieures peuvent être fabriquées en matériau plastique et lesdits des moyens de réception peuvent comprendre au moins un crochet fixé sur chacune des barres supérieures. Une table de suspension comprenant des barres supérieures en matériau plastique est simple à mettre en oeuvre et garantit une durée de vie optimale de la table. De préférence, le plastique est sélectionné de sorte à ce qu'il soit fabriqué à partir de matériau plastique recyclé et à ce qu'il soit facilement recyclable pour limiter son impact environnemental. De plus, les crochets destinés à recevoir les axes de suspension des poches peuvent y être fixés facilement, par vissage par exemple. Cette solution est donc relativement simple à mettre en oeuvre.

de manière avantageuse, lesdites barres supérieures peuvent être chacune constituées de deux demi-barres présentant des fentes/encoches correspondantes qui, lorsque les demi-barres sont assemblées, forment les moyens de réception et de maintien d'au moins un contenant à coquillages.

Cette technique relativement simple à mettre en oeuvre permet d'emprisonner les axes de suspension des contenants entre les deux demi-barres de sorte à assurer un maintien optimal et fiable des contenants sur la table de suspension.

De préférence, la table de suspension peut, pour cette technique spécifique avec demi-barres, comprendre des deuxièmes moyens de verrouillage réversibles desdites demi-barres entre-elles lorsqu'elles sont assemblées et qu'elles reçoivent lesdits contenants.

Cela permet de verrouiller les demi-barres entre elles de sorte à empêcher le retrait, non souhaité par exemple, des poches à huîtres.

de manière avantageuse, la table de suspension peut en outre comprendre moins une traverse et/ou au moins une barre de renfort, ladite traverse et/ou au moins une barre de renfort étant fixée entre au moins deux pieds à une distance de l'extrémité supérieure des pieds au moins égale à la largeur d'un contenant.

De cette manière, la rotation des contenants n'est pas gênée par des éléments structurels du support de suspension. De plus, l'axe de suspension et/ou la partie centrale des contenants est facile d'accès à un opérateur ou à une machine de sorte à faciliter le relevage des poches.

La présente invention a également pour objet un équipement d'élevage de coquillages en surélévation comprenant un support de suspension selon l'invention et au moins un contenant selon l'invention suspendu audit support de suspension de manière que l'axe de suspension du contenant selon l'invention soit reçu par une paire de moyens de réception disposées en vis-vis sur chacune des barres supérieures.

Enfin, la présente invention a encore pour objet l'utilisation de l'équipement selon l'invention en vue de la mécanisation/automatisation du chargement et du déchargement des contenants selon l'invention sur la table de suspension selon l'invention.

### Liste des Figures

La divulgation, ainsi que les différents avantages qu'elle présente, seront plus facilement compris, à la lumière de la description qui va suivre de plusieurs modes de réalisation illustratifs et non limitatifs de celle-ci, et des dessins annexés parmi lesquels :
[Fig. 1] est une vue partiellement éclatée et de face d'un premier mode de réalisation d'un contenant selon la divulgation, le contenant se présentant sous la forme d'une poche souple ;
[Fig. 2] est une vue de dessus de la poche de la figure 1 ;
[Fig. 3] est une vue de dessus illustrant l'armature de la poche de la figure 1 ;
[Fig. 4] est une vue éclatée et de face de l'armature de la poche de la figure 1 ;
[Fig. 5] est une vue éclatée et de côté de l'armature de la poche de la figure 1 ;
[Fig. 6] est une vue de côté de la poche de la figure 1 ;
[Fig. 7] est une vue en perspective d'un support de suspension selon un premier mode de réalisation ;
[Fig. 8] est une vue de dessus de la table de suspension de la figure 7, montrant également des vues détaillées (en perspective et de côté) d'un premier mode de réalisation des moyens de réception conformes à l'invention ;
[Fig. 9] est une vue de face d'une table de suspension selon un deuxième mode de réalisation ;
[Fig. 10a] est une vue détaillée et en coupe de la fixation des barres supérieurs sur les pieds de la table de suspension de la figure 9 ;
[Fig. 10b] est une vue détaillée et en coupe de la fixation des barres supérieurs entre-elles de la table de suspension de la figure 9 ;
[Fig. 11] est une vue de côté d'un exemple de table de suspension conformes à l'invention, les contenants étant dans une position de repos ;
[Fig..12] est une autre vue de côté de la table de suspension de la figure 11 avec des contenants dans une position inclinée ;
[Fig. 13] est une vue de côté d'une table de suspension selon un troisième mode de réalisation.

### Description détaillée

Le principe général de l'invention repose sur la mise en oeuvre d'un contenant à coquillages, se présentant par exemple sous la forme d'une poche souple ou d'un panier rigide, portant un axe de rotation solidaire et individuel configuré pour coopérer avec une table de suspension. Plus particulièrement, le contenant comprend une armature, faite par exemple en métal, en plastique ou en une combinaison de ceux-ci, sur laquelle est solidarisé l'axe de rotation. Par exemple, lorsque le contenant se présente sous la forme d'une poche souple, l'axe de rotation est solidarisé sur un cintre de l'armature qui permet de donner une forme bombée à la poche de sorte à accueillir les huîtres et permettre leur mouvement au sein de la poche.

C'est la mise en oeuvre de l'axe de rotation sur le contenant qui permet des mouvements de rotation automatiques de ce dernier, peu importe le fait que le contenant soit souple ou rigide et peu importe ses dimensions.

La présente divulgation concerne également un support de suspension, ci-après appelé table de suspension, comprenant des moyens de réception et de verrouillage de l'axe de rotation porté par chacun des contenants sur la table de suspension tout en permettant aux contenants de pivoter/tourner par rapport à la table de suspension, et cela au gré des marées et des vagues de sorte à engendrer un secouage/remuage automatique, c'est-à-dire naturel, du contenant à coquillage.

Contrairement aux tables de suspension connues des solutions de l'art antérieur, le support de suspension selon la divulgation ne comporte aucune barre transversale haute. De cette manière, les contenants, et notamment leur partie centrale ou leur axe de rotation, sont libres et faciles d'accès pour les opérateurs ou pour des machines lors des opérations de relevages, notamment.

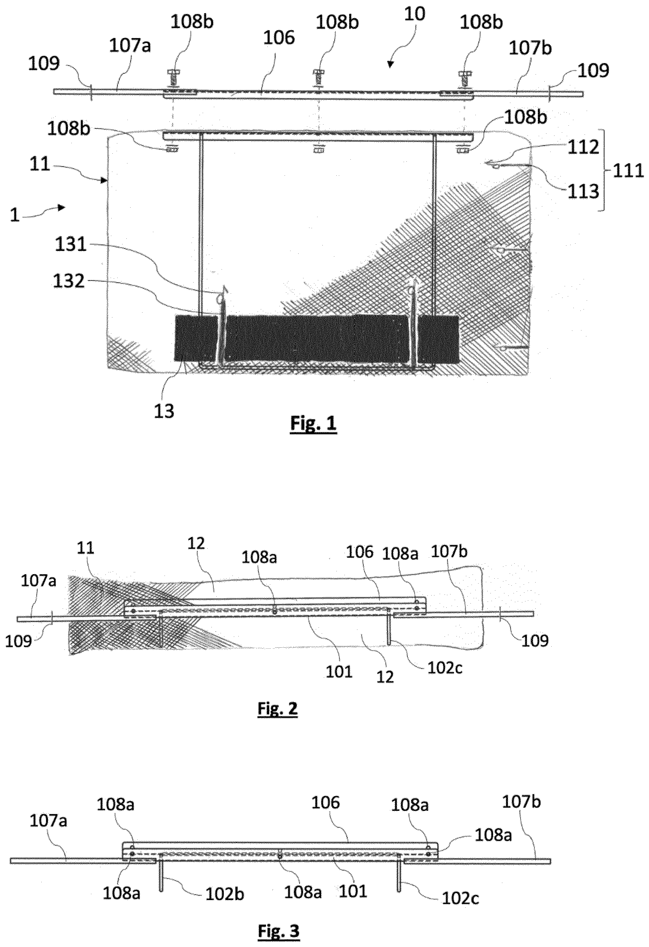

Les figures 1 à 6 illustrent un contenant 1 selon l'invention pour la culture de coquillages qui, dans cet exemple, se présente sous la forme d'une poche 1 à huîtres.

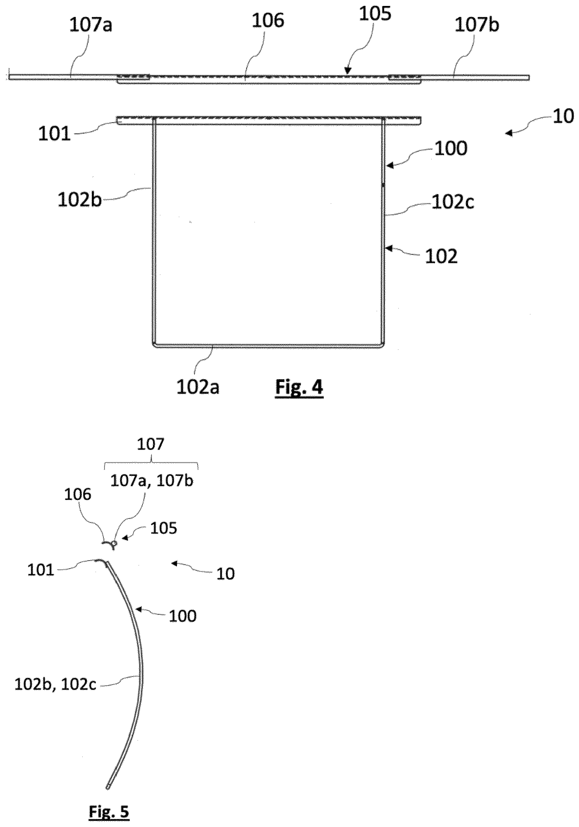

La figure 1 illustre une vue partiellement éclatée d'une poche 1 selon la présente divulgation. Cette poche 1 présente une armature 10 et une enveloppe 11. La figure 4 montre que l'armature 10 comprend un cintre 100 et un axe de suspension 105. De préférence, l'armature 10 est fabriquée en métal, et plus préférentiellement encore en acier inoxydable de sorte à résister aux contraintes/conditions marines.

Une enveloppe 11 (visible sur la figure 1) en grillage souple est disposée sur/par-dessus l'armature 10 de sorte à former un volume, ou espace, 12 de réception des huîtres. L'enveloppe 11, qui recouvre donc au moins en partie l'armature 10, est de préférence fabriquée en plastique recyclé et/ou recyclable. Cette matière présente un coût relativement faible et une résistance élevée aux conditions marines. De plus, ce matériau est utilisé depuis de nombreuses années pour fabriquer les poches à huîtres et il a démontré qu'il était parfaitement adapté/compatible avec l'élevage d'huîtres.

Les dimensions des mailles du grillage de l'enveloppe 11 sont sélectionnées en fonction de de la croissance, c'est-à-dire de la taille, des huîtres. Ainsi, les poches à huîtres doivent être successivement changées tout au long de la croissance des huîtres pour adapter les dimensions du maillage de l'enveloppe souple 11 à la taille des huîtres. De manière générales, les poches à huîtres sont changées trois fois durant la croissance des huîtres.

L'enveloppe 11 présente, avant son assemblage avec l'armature 10, au moins une de ses deux extrémités ouvertes. En d'autres termes, l'enveloppe 11 se présente sous la forme d'un tube ouvert au moins au niveau de l'une de ses extrémités. Ainsi, pour assembler l'armature 10 avec l'enveloppe 11, il suffit de glisser le cintre 100 dans l'enveloppe 11 puis de solidariser l'axe de suspension 105 (situé en dehors de l'enveloppe 11 comme illustré sur la figure 1) avec le cintre 100. Ainsi, l'enveloppe souple 11 est pincée entre le cintre 100 et l'axe de suspension 105.

Dans une variante, si les deux extrémités de l'enveloppe 11 sont ouvertes, il est alors nécessaire de fermer/condamner l'une des extrémités de sorte à former le fond de l'enveloppe 11. Cette fermeture peut être obtenue par la mise en oeuvre de colliers de serrage résistants aux UV, ou par collage ou soudage, par exemple.

L'extrémité ouverte, ou ouvrable, de l'enveloppe souple 11 présente des moyens de fermeture 111 réversibles de l'enveloppe souple 11. Dans l'exemple illustré, l'enveloppe souple 11 comprend des crochets 112 montés sur un élastique 113. Plus précisément, une première extrémité de l'élastique 113 est solidaire de la paroi extérieure de l'enveloppe 11 tandis que l'autre extrémité de l'élastique porte un crochet 112 destiné à venir coopérer avec un trou du maillage de l'enveloppe souple 11 pour permettre de mettre en contact les parois de l'enveloppe 11 au niveau de cette extrémité ouverte et fermer de manière hermétique l'extrémité de l'enveloppe 11 (en ce sens que les huîtres ne peuvent pas sortir de l'espace de réception 12 de manière non souhaitée). Pour faciliter la fermeture de l'extrémité de l'enveloppe souple 11, il peut être envisagé de replier l'extrémité ouverte de l'enveloppe souple 11 sur elle-même pour s'assurer que les huîtres ne puissent pas sortir de manière non souhaitée de la poche 1. Dans cet exemple, l'enveloppe souple 11 comprend trois crochets 112 de fermeture.

Selon un autre mode de réalisation non illustré, l'enveloppe souple 11 peut comprendre un rabat (non illustré) muni des élastiques 113 et des crochets 112 décrits précédemment. De cette manière, il est possible de recouvrir l'extrémité ouverte de l'enveloppe 11 avec le rabat et de maintenir/verrouiller la position du rabat sur l'ouverture de l'enveloppe 11 grâce aux crochets 112 et aux élastiques 113. Le rabat permet de fermer de manière hermétique l'extrémité de l'enveloppe 11 (en ce sens que les huîtres ne peuvent pas sortir de l'espace de réception 12 de manière non souhaitée).

L'armature 10 est illustrée en détails et selon différentes vues sur les figures 3 à 5. Comme indiqué précédemment, elle comprend un cintre 100 et un axe de suspension 105 qui sont solidarisés ensemble lors de l'assemblage de la poche 1.

Le cintre 100 comprend une embase 101 sensiblement rectiligne qui présente, dans cet exemple, une section sensiblement en arc de cercle (comme illustré sur la figure 5). Cette embase 101 s'étend sensiblement sur l'ensemble de la longueur de l'enveloppe souple 11 lorsque ces éléments sont assemblés (voir figure 1). Dans cet exemple, l'embase 101 présente une longueur d'environ 65 cm. Cette forme en arc de cercle de la section permet de s'adapter à la forme de la poche 1 à cet endroit de la poche 1 et d'éviter de pincer l'enveloppe souple 11, de sorte à limiter les risques de déchirement de cette dernière.

À partir de cette embase 101 s'étend un élément 102 en forme de U (selon la vue de face de la figure 4) dont les extrémités du U sont solidaires de l'embase 101. En d'autres termes, cet élément 102 comprend un montant central 102a, s'étendant sensiblement parallèlement à l'embase 101, présentant deux extrémités à partir desquelles s'étendent sensiblement perpendiculairement deux montants latéraux 102b, 102c. Les montants latéraux 102b, 102c relient donc le montant central 102a à l'embase 101 et forment sensiblement un carré (selon la vue de face du cintre illustrée sur la figure 4). Dans cet exemple, les montants 102a, 102b et 102c présentent une longueur d'environ 50 cm et l'élément 102 en forme de U est sensiblement centré par rapport à l'embase 101.

Les montants latéraux 102b, 102c présentent un profil (selon la vue de côté de la figure 5 notamment) arqué/courbé qui permet de donner son volume à la poche 1 lorsque que l'enveloppe souple 11 est assemblée avec le cintre 100. Il est donc possible de choisir/sélectionner le rayon de courbure que l'on souhaite pour les montants latéraux 102b, 102c afin de définir les dimensions de l'espace 12 de réception des huîtres. Dans cet exemple, les montants latéraux 102b, 102c sont courbés de sorte à obtenir un galbe d'environ 8 cm de haut.

Un tel cintre 100, disposé à l'intérieur de l'enveloppe souple 11, permet à la poche 1 de toujours garder sa forme de « casier », c'est-à-dire de garder une forme bombée ménageant un espace de réception 12 des huîtres, lorsqu'elle est chargée et fermée. De plus, une fois que la poche 1 est vide, il est possible d'aplatir/écraser le côté ouvrable afin de permettre à l'enveloppe souple 11 de s'aplatir/s'écraser contre le cintre 100. Ainsi, toute la poche 1 s'aplatit contre le cintre 100, de sorte à suivre la forme du cintre 100 et fournir un encombrement optimisé. De cette manière, lorsque les poches 1 ne sont pas utilisées en mer, elles peuvent être empilées de sorte à présenter un encombrement limité permettant un gain de place très important lors du stockage de ces dernières à terre.

L'axe de suspension 105 présente une portion centrale 106 sensiblement rectiligne et qui présente une section en arc de cercle (comme illustré sur la figure 5) correspondante à l'embase 101. Cette partie centrale 106 est sensiblement identique à l'embase 101, et présente donc sensiblement la même longueur que l'embase 101 (soit environ 65 cm dans l'exemple illustré). La partie centrale 106 et l'embase 101 présentent une forme sensiblement en U.

La portion centrale 106 porte, au niveau de chacune de ses extrémités, une tige circulaire 107a, 107b formant l'axe de rotation 105 de la poche 1. Plus précisément, dans l'exemple illustré, les tiges circulaires 107a, 107b sont fixées au niveau des extrémités, sur la surface supérieure de la portion centrale 106 (c'est-à-dire la surface opposée à l'intérieur de la poche 1). Dans cet exemple, les tiges circulaires 107a, 107b présentent une longueur d'environ 30 cm et dépassent d'environ de 23 cm par rapport à la portion centrale 106.

Comme illustré sur la figure 5, les tiges circulaires 107a, 107b s'étendent de préférence dans un axe décalé parallèlement à l'axe de la portion centrale 106. Ce décalage, c'est-à-dire le fait que l'axe des tiges circulaires 107a, 107 soit excentré/décalé permet à la poche 1 de tourner/pivoter, par rapport à la table de suspension, vers le haut et de se replacer toujours par le même coté. Ainsi, la rotation des poches est mieux maîtrisée/contrôlée même en cas de tempêtes. La mortalité des huîtres est donc sensiblement réduite.

De préférence, les tiges circulaires 107a, 107b sont soudées sur la portion centrale 106. D'autres méthodes de solidarisation peuvent néanmoins être envisagées, tel que le vissage ou le rivetage par exemple. On pourrait aussi envisager de fabriquer cet ensemble par un moulage en plastique très résistant, dans lequel la portion centrale 106 recevrait et maintiendrait les tiges circulaires 107a et 107b, fabriquées en inox, formant l'axe de rotation 107. Dans une autre variante, l'axe de rotation 107 pourrait lui-même être en plastique, avec par exemple un système d'attache du contenant 1 sur le support de suspension qui serait différent.

Dans encore une autre variante non illustrée, il pourrait être envisagé de ne prévoir qu'une seule tige circulaire dont la longueur serait sensiblement identique à la somme des longueurs des tiges circulaires 107a, 107b et de la portion centrale 106. Cette tige unique, formant l'axe de rotation 107, pourrait être fixée sur la portion centrale 106 conformément à la description ci-dessus. Une telle mise en oeuvre pourrait par exemple être particulièrement adaptée pour des contenants 1 de plus grandes dimensions ou d'épaisseur plus élevée, qui seraient autorisées dans certaines régions de culture.

Contrairement aux techniques décrites en relation avec l'art antérieur, l'axe de rotation formé par l'axe de suspension 105 est donc ici fixé sur la poche (et non sur la table). De préférence, cet axe est légèrement décalé par rapport à la surface extérieure de la poche 1, ce qui permet à la poche 1 de toujours redescendre du même côté lorsque la mer baisse. De cette manière, la poche 1 tourne sur un axe intégré à la poche, ou porté par la poche. Bien évidemment, la mise en oeuvre de cet axe ne gêne pas le remplissage et le vidage de la poche 1.

Le cintre 100 et l'axe de suspension 105 sont solidarisés dans cet exemple par des moyens de fixation 108 réversibles de sorte à faciliter l'assemblage et le démontage de l'enveloppe 11 avec l'armature métallique 10 ainsi que le remplacement de l'enveloppe souple 11 lors de la croissance des huîtres, par exemple. Dans cet exemple, les moyens de fixation 108 se présentant sous la forme de perçages 108a ménagés dans la portion centrale 106 de l'axe suspension 105 et l'embase 101 du cintre 100. Ces perçages 108a sont destinés à coopérer avec des vis et des écrous (des écrous classiques ou des écrous freins) de fixation 108b. Dans cet exemple, la portion centrale 106 de l'axe suspension 105 et l'embase 101 du cintre 100 présentent trois perçages 108a coopérant avec trois paires de vis-écrous de fixation 108b. Ils sont, dans cet exemple, situés au centre de la portion centrale 106 et à environ 2 cm des extrémités de la portion centrale 106.

Les tiges circulaires 107a, 107b portent en outre des rondelles de butée 109 qui permettent de maintenir la position de la poche 1 par rapport à la table de suspension (décrite dans la suite de cette description). Ainsi, ces rondelles de butée 109 permettent un centrage optimal de la poche 1 et évite qu'elle ne se déplace en translation par rapport à la table de suspension, même en cas de tempêtes par exemple. Ces rondelles de butée 109 sont par exemple soudées sur les tiges circulaires 107a, 107b, à une distance déterminée de l'extrémité libre des tiges circulaires 107a, 107b pour permettre un centrage optimal. Dans cet exemple, les rondelles de butée 109 sont soudées à environ 7.5 cm de l'extrémité libre.

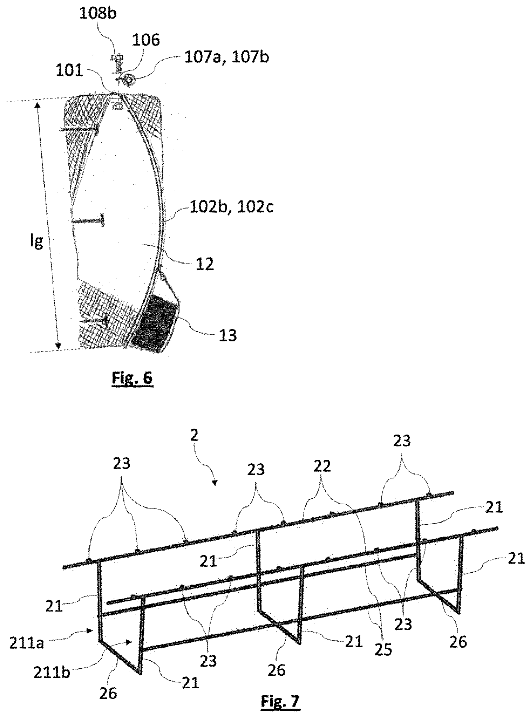

Comme illustré sur les figures 1 et 6, la poche 1 à huîtres porte au moins un flotteur 13, qui est de préférence amovible (comme montré par les figures 1, 9 et 11). De préférence, le ou les flotteurs 13 sont disposés sur la même face de sorte à assurer une rotation et une redescente de la poche 1 toujours dans le même sens/du même côté. Dans cet exemple, la poche 1 ne porte qu'un seul flotteur 13 s'étendant sensiblement sur une longueur identique au cintre 100, comme visible sur la figure 1.

De préférence, le flotteur 13 est situé sur la moitié inférieure de la poche 1 (selon la vue de la figure 1), c'est-à-dire au plus proche du sol ou à l'opposé de l'axe suspension 105. Cela permet d'assurer une rotation optimale de la poche 1 lors des marées.

De préférence encore, le flotteur 13 est fixé sur la surface l'extérieure de l'enveloppe souple 11 de la poche 1, et préférentiellement du côté de cintre 100, de façon à permettre aux huîtres de rouler librement à l'intérieur de la poche 1.

Dans cet exemple, le flotteur 13 est fixé sur l'extérieur de l'enveloppe 11 par un mécanisme de crochet 131 et de sangles 132 élastiques. Ce mécanisme permet de fixer simplement et de manière fiable le flotteur 13 sur l'enveloppe 11. Néanmoins, on comprend bien évidemment que d'autres solutions peuvent être envisagées pour fixer le flotteur 13, sans s'écarter du principe général de l'invention.

Le flotteur 13 est de préférence amovible, de telle sorte qu'il est possible de le fixer ou non sur la poche 1 en fonction des périodes de l'année afin d'optimiser la croissance des coquillages. Ainsi, lorsque la mer monte ou descend, le flotteur 13 fait tourner la poche 1 autour de son axe suspension 105. Cette rotation de la poche 1 permet donc de faire bouger les huitres, sans intervention de l'homme, deux fois par jour en périodes de vives eaux sur les parcs d'élevage et tous les jours sur les parcs d'engraissement situés plus à terre.

Ainsi, la poche 1 à huîtres selon l'invention permet de ne plus avoir à secouer/retourner manuellement les poches 1 à huîtres, contrairement à la technique traditionnellement employée. De préférence, la poche 1 à huîtres de l'invention présente des dimensions conformes à la réglementation en vigueur, c'est-à-dire que les poches à huîtres de l'invention entrent dans le cadre imposé par le schéma des structures maritimes Plus précisément, le schéma des structures des exploitations de cultures marines du département de la Manche (France) stipule que les poches doivent respecter les dimensions suivantes : 1 m x 0.50 x 0.20 soit 0.1 m³. D'autres dimensions sont possibles/autorisées, à condition de respecter le volume indiqué ci-dessus. Il est à noter que le schéma des structures des exploitations de cultures marines de Loire-Atlantique ne présente lui qu'une seule indication, à savoir « poche type 1 mètre ».

Plus particulièrement, la poche 1 présente, dans cet exemple, une longueur d'environ 93 cm et une largeur d'environ 50 cm. L'épaisseur de la poche, en son centre ou au niveau de son épaisseur la plus importante, est comprise entre 12 à 16 cm une fois que la poche 1 est assemblée. Ces dimensions préférentielles permettent à ces poches de rester relativement facilement manipulables, avec une forme permettant le roulage des huîtres à l'intérieur. En d'autres termes, la poche doit garder une forme sensiblement rectangulaire.

De préférence, la poche 1 présente une longueur comprise entre 70 cm et 120 cm, une largeur comprise entre 40 et 70 cm et une épaisseur comprise entre 12 et 40 cm.

Selon un autre exemple, la poche 1, présentant un flotteur (décrit ci-après) pourra présenter une longueur de 0.70 m, une larguer de 0.40 m et une épaisseur de 0.35 m, soit un volume d'environ 0.1 m³ répondant au schéma des structures de la Manche.

Une telle poche 1 permet, pour l'engraissement des huîtres, de cultiver avec une densité comprise entre environ 120 et 130 unités par poche 1. Pour l'élevage (jusqu'à un stade dit « commercialisable », la densité est comprise entre 180 à 220 unités par poche 1. Enfin, Pour l'élevage (jusqu'à un stade dit de « demi-élevage »), la densité est comprise entre 350 à 400 unités par poche 1.

Il est à noter que l'enveloppe 11 présente, par exemple, avant assemblage avec l'armature 10, une longueur d'environ 115 cm et une larguer d'environ 53 cm.

On comprend bien évidemment que d'autres dimensions de poches peuvent être envisagées, notamment en cas de modification des règlementations en vigueur et des différences de réglementations selon les pays, sans pour autant s'écarter du principe général de l'invention.

Grâce à ces dimensions, la poche 1 conforme à la divulgation permet de maintenir un rendement au moins aussi élevé qu'avec des poches conformes à la technique traditionnelle, tout en améliorant nettement la forme et la qualité des huîtres. La poche de la présente divulgation permet en outre de sensiblement diminuer la pénibilité du travail de secouage puisque la poche tourne de manière automatique/naturelle grâce aux marées.

Par ailleurs, la poche 1 conforme à la divulgation est adaptée à toutes les étapes d'utilisations des poches à huîtres traditionnelles, c'est-à-dire au remplissage/vidage et à la pose sur les parcs de dépôts en attendant le triage des huîtres, par exemple.

De plus, la poche 1 conforme à la divulgation permet, selon la taille du maillage utilisé, l'élevage des huîtres sur tout le cycle, c'est-à-dire du naissain à l'affinage.

Un tel casier rigide 1' peut également porter directement un axe de rotation 105 tel que décrit précédemment. Le casier rigide 1' peut également porter un flotteur 13 tel que décrit précédemment. L'axe de rotation 105 et le flotteur 13 présentent les mêmes structures, caractéristiques et avantages que ceux présentés en relation avec la poche souple 1 décrite précédemment et ne sont donc pas décrits de nouveau.

On comprend donc que le principe général de l'invention est donc applicable à différents types de contenants 1, 1', qu'ils soient souples ou rigides et avec des dimensions variées, adaptées à la culture de coquillages notamment.

L'invention concerne également un support de suspension 2, ci-après appelé table de suspension 2, qui est configuré pour recevoir et maintenir en position une pluralité de contenants 1, 1' tel que la poche souple 1 ou le casier rigide 1' décrits précédemment. La table de suspension 2 est également configurée pour permettre à l'axe de suspension 105 des contenants 1, 1' de pivoter par rapport à la table 2, de sorte à permettre un mouvement de rotation automatique/naturel du contenant 1, 1' par rapport à la table de suspension 2 lors des marées, notamment. Pour ce faire, la table de suspension 2 ne présente pas de barre transversale au voisinage des contenants 1, 1' suspendus sur la table de suspension 2 qui pourrait empêcher/gêner la rotation des contenants 1, 1'. De plus, l'absence de ces barres transversales, généralement positionnées au même niveau que les barres supérieures 22 décrites plus en détails dans la suite de cette description, permet de faciliter le relevage manuel par un opérateur, ou éventuellement un relevage mécanique par une machine, puisque les axes de rotation 105 et/ou le centre des contenants 1 sont aisément accessibles.

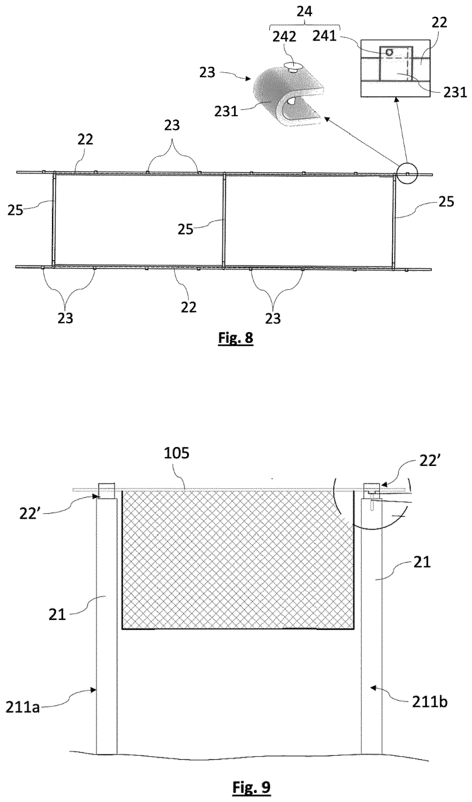

Un premier exemple de table de suspension 2 est illustré sur les figures 7 et 8. Une table de suspension 2 selon la divulgation comprend au moins quatre pieds 21 disposés selon au moins deux lignes, ou rangées, 211a, 211b parallèles. Dans l'exemple illustré, la table de suspension 2 comprend six pieds agencés en deux rangées de trois pieds 21 écartés de manière constante dans chaque rangée.

Dans cet exemple, et pour optimiser la stabilité de la table de suspension 2, les six pieds 21 sont agencés en trois paires de pieds 21. Les pieds 21 d'une même paire sont reliés par une traverse 26 formant ainsi un U dont la base au sol (formée par la traverse 26) est de préférence moins large (par exemple de 30 cm) que le l'écartement entre l'extrémité libre des pieds 21 d'une même paire de pieds. De préférence, l'extrémité libre des pieds 21 d'une même paire sont écartés d'une distance d'environ 97 à 100 cm. Ainsi, la table de suspension 2 présente une forme évasée permettant un empilement des tables 2 lors du stockage à terre, de sorte à limiter leur encombrement, notamment.

Afin de garantir une stabilité et une durée de vie optimales de la table de suspension 2, qui rappelons-le est destinée à être posée sur le fond marin, des barres de renfort 25 peuvent être mises en oeuvre pour relier les pieds 21 d'une même rangée 211a, 211 afin d'éviter tout balancement de la table de suspension 2 en mer.

De préférence, et afin d'assurer une mise en place, une rotation, et un retrait optimal des contenants 1, 1' sur la table de suspension 2, les barres de renfort 25 sont agencées à une distance de l'extrémité supérieure des pieds 21 au moins égale à la largeur Ig (visible sur la figure 6) d'un contenant 1, 1' et notamment d'une poche 1 à huîtres ou d'un panier rigide 1' tel que décrit précédemment. Cette distance assure que le contenant 1, 1' puisse pivoter librement par rapport à la table de suspension 2 et permet de faciliter les opérations de relevage des contenants 1, 1' par exemple à l'aide d'une machine de relevage (non décrite).

Les pieds 21 portent, au niveau de leur extrémité supérieure, des barres supérieures, ou lambourdes, 22. Plus précisément, chaque rangée 211a, 211b de pieds 21 porte une barre supérieure 22. Ainsi, la table de suspension 2 présente, dans cet exemple, deux barres supérieures 22 s'étendant parallèlement.

Les barres supérieures 22 comprennent des moyens de réception 23 d'au moins un contenant 1, 1' sur la table de suspension 2. Plus précisément, les barres supérieures 22 comprennent une pluralité de moyens de réception 23 disposés de préférence avec un écartement constant/régulier le long de chaque barre supérieure 22. Les moyens de réception 23 sont disposés à des positions correspondantes sur chacune des barres supérieures 22 de sorte que les moyens de réception 23 soient disposés en vis-à-vis sur les barres supérieures 22 et forment des paires de moyens de réception 23. Ainsi, chaque paire de moyens de réception 23 peut recevoir et maintenir en position un contenant 1. Les moyens de réception 23 sont plus précisément configurés pour recevoir l'axe de suspension 105 d'un contenant 1, 1' tout en permettant une rotation de l'axe de suspension 105 au sein des moyens de réception 23.

La mise en oeuvre de moyens de réception 23 de l'axe de suspension 105 du contenant 1, 1' permet de fixer aisément, en mer, les contenants 1, 1' à huîtres sans faire appel à aux bandes élastiques ou en caoutchouc utilisées dans au moins certaines des techniques de l'art antérieur. Ces moyens de réception 23 permettent en outre de supprimer ou à tout le moins limiter les risques de perte des contenants 1, 1' en mer.

L'exemple illustré sur la figure 8 montre un premier mode de réalisation dans lequel les moyens de réception 23 se présentent sous la forme de crochets 231 en forme de U couché qui sont fixés sur les barres supérieures 22. De préférence, les crochets sont fabriqués en métal, et plus préférentiellement encore en acier inoxydable. Dans cet exemple, chaque barre supérieure 22 porte huit crochets 231 soudés et espacés d'environ 55 cm le long de la barre supérieure 22. Ainsi, la table de suspension 2 illustrée est capable de supporter huit contenants 1, 1' espacées d'environ 55 cm. De préférence, les contenants 1, 1' situées en extrémité de la table de suspension 2 sont séparées des contenants 1, 1' de la table de suspension 2 suivante d'environ 57 cm.

Au lieu d'utiliser des crochets 231 en forme de U couché, on peut aussi avantageusement utiliser des crochets 231 en forme de V orienté vers le haut, qui sont particulièrement adaptés pour l'automatisation/mécanisation de l'enlèvement des contenants.

De préférence, les crochets 231 sont tous orientés dans la même direction et le même sens afin de permettre une mécanisation/automatisation de l'installation/chargement et de la désinstallation/déchargement des contenants 1, 1' sur la table de suspension 2.

La table de suspension 2 comprend également des premiers moyens de verrouillage 24 de l'axe de support 105 dans les moyens de verrouillage 23 afin d'empêcher que le contenant 1, 1' ne puisse être retirée de manière involontaire ou non souhaitée de la table de suspension 2.

Dans cet exemple, les premiers moyens de verrouillage réversibles 24 se présentent sous la forme d'un perçage 241 ménagé à travers le crochet 231 et d'une goupille 242, de préférence en acier inoxydable, configurée pour coopérer avec ledit perçage 241. De préférence, les crochets 231 sont soudées de manière légèrement décalée par rapport à l'axe longitudinal de la barre supérieure 22 afin d'assurer une insertion aisée de la goupille 242 dans le perçage, c'est-à-dire sans être gêné par la barre supérieure 22, notamment. Cette technique relativement simple à mettre en oeuvre permet de maintenir de manière fiable le contenant 1, 1' sur la table de suspension 2. On entend par moyens de verrouillage réversible un moyen de verrouillage qui peut être déplacer au moins entre une position verrouillée et une position déverrouillée.

Dans une variante non illustrée, on pourrait envisager de remplacer la goupille 242 par un cadenas ou tout autre dispositif de verrouillage sécurisé qui permettrait d'éviter tout vol de contenant, par exemple.

Pour installer les contenant 1, 1' à huîtres sur la table de suspension 2, il suffit donc :
- de poser le contenant 1, 1', par son axe de suspension 105, sur les barres supérieures 22 de la table de suspension 2,
- de déplacer l'axe de suspension 105 du contenant 1, 1' dans le fond des crochets 231, et
- de mettre en place les goupilles 242 de verrouillage au niveau des crochets 231 des deux barres supérieures 22.

Dans les variantes décrites dans la suite de la description, sauf indication contraire, les éléments identiques portent les mêmes numéros de référence et présentent les mêmes caractéristiques techniques et modes de fonctionnement.

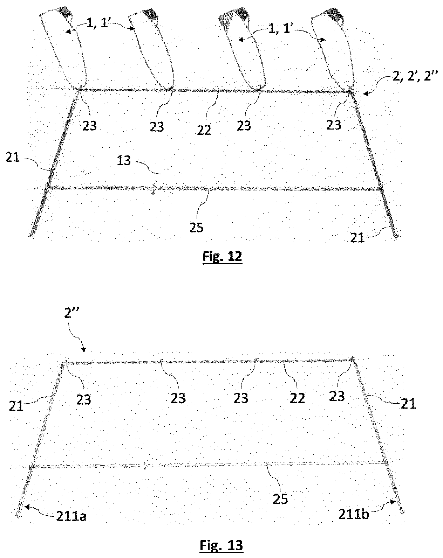

La figure 13 illustre un autre exemple d'un support de suspension 2" se présentant également sous la forme d'une table de suspension. Comme précédemment, cette table de suspension 2" comprend quatre pieds 21 disposés selon deux rangées, 211a, 211b parallèles et écartés de manière constante dans chaque rangée.

De préférence, et comme illustré, les pieds 21 sont inclinés. Ainsi, la table de suspension 2" présente une forme évasée permettant un empilement des tables 2 lors du stockage à terre, de sorte à limiter leur encombrement, notamment. De plus, l'angle d'inclinaison des pieds 21 est sélectionné pour obtenir un décalage d'environ 26 cm par rapport à la verticale du bout des barres supérieures 22 afin de permettre un positionnement optimal et aisé de la table suivante/adjacente du type pieds contre pieds. Cette inclinaison particulière permet d'obtenir directement la distance souhaitée d'environ 55 cm entre les moyens de réception 23 des axes de rotation 105 des contenants 1, 1' de deux tables adjacentes.

Dans cet exemple, la table de suspension 2" est adapté pour recevoir quatre contenants 1. Cela permet de manipuler de manière aisée les contenants par un seul opérateur.

Les tables de suspension 2, 2" illustrée sur les figures 7, 8 et 14 sont par exemple fabriquées en métal, et de préférence en fer. En d'autres termes, les pieds 21, les barres supérieures 22, les barres de renfort 25 et les traverses 26 sont en fer et sont soudés ensemble. Une telle table de suspension 2, 2" entièrement en métal, est adaptable à tous les types de terrains, c'est-à-dire qu'elle peut être installée sur des sols meubles, comme du sable ou de la vase, et sur des sols durs, comme sur un sol rocheux, par exemple. Cette table de suspension 2, 2" peut par exemple être fixée au sol de façon identique aux tables traditionnelles, c'est-à-dire par des piquets en fer présentant sensiblement une forme de « 1 » (un) ou de « L ». Cette forme des piquets permet de ne pas avoir à utiliser de caoutchouc pour fixer les piquets aux pieds 21 de la table de suspension 2. Pour ce faire, l'angle/le coin intérieur du « 1 » ou du « L » est positionné au niveau des jonctions entre les pieds 21 et les traverses 26 ou les barres de renfort 25.

Il est à noter qu'une telle table de suspension 2 est facilement manipulable lors de la pose sur parcs. En effet, elle présente un poids inférieur aux tables traditionnellement utilisée rendant ainsi moins difficile physiquement le travail des opérateurs.

Dans une variante non illustrée, la table de suspension 2, 2" est fabriquée en bois et en fer. Plus précisément, une telle table de suspension 2, 2" comprend des pieds 21, se présentant sous la forme de pieux en bois, enfoncés dans le sol à espace régulier et selon au moins deux rangées 211a, 211b, conformément à la description ci-dessus.

Plus particulièrement, le bois utilisé est de préférence un bois exotique imputrescibles connu pour sa longévité en milieu marin. Les pieds en bois 21 sont de préférence implantés verticalement dans le substrat et réglés en hauteur (par exemple entre de 0,90 m et 1,40 m) selon les parcs et les coefficients de marée de ces parcs.

Par exemple, les deux rangées 211a, 211b de pieds 21 sont écartées d'environ 1 m et les pieds d'une même rangée 211a, 211b sont espacés d'environ 1,10 m.

De manière identique au mode de réalisation précédemment décrit, des barres supérieures 22 en fer sont fixées (par exemple par boulonnage) sur l'extrémité libre des pieds 21 et portent des moyens de réceptions 23 de l'axe de suspension 105 des contenants 1 à huîtres.

Par exemple, les moyens de réception 23 peuvent se présenter, comme précédemment, sous la forme de crochets 231 en U couché (cf. figure 8) ou en forme de V (orienté vers le haut), lesdits crochés soudés étant sur les barres supérieures 22. Des premiers moyens de verrouillage 24 (par exemple identiques au perçages 241 et aux goupilles 242) peuvent également être mis en oeuvre. Dans cette variante, les barres de renfort 25 et les traverses 26 sont optionnelles.

Une telle table de suspension 2, 2", combinant des pieds 21 en bois et des barres supérieures 22 en fer, est particulièrement adaptée pour être installée sur des sols meubles, comme du sable ou de la vase, par exemple. En effet, de tels pieds en bois ne peuvent être plantés que dans des sols ne comprenant que peu ou pas de roches. Les parcs de culture mis en oeuvre sur des sols constitués principalement de rocher ne pourront donc pas accueillir ce type de table.

Dans une autre variante non illustrée, il est possible de remplacer les barres supérieures 22 en fer par des barres supérieures 22 en bois. De cette manière, la table de suspension 2, 2" comprend des pieds 21, se présentant sous la forme de pieux en bois, enfoncés dans le sol à espace régulier et selon au moins deux rangées 211a, 211b, conformément à la description ci-dessus. De manière identique au mode de réalisation précédemment décrit, des barres supérieures 22 (en bois cette fois-ci) sont fixées sur l'extrémité libre des pieds 21 et portent des moyens de réceptions 23 de l'axe de suspension 105 des contenants 1, 1'.

Par exemple, les moyens de réception 23 peuvent se présenter sous la forme de crochets 231 en U couché (en acier inoxydable par exemple) fixés par vissage sur les barres supérieures 22. Des premiers moyens de verrouillage 24 (par exemple identiques au perçages 241 et aux goupilles 242) peuvent également être mis en oeuvre. Dans cette variante, les barres de renfort 25 et les traverses 26 sont également optionnelles.

Comme précédemment, le bois utilisé est de préférence un bois exotique imputrescibles connu pour sa longévité en milieu marin. Une telle table de suspension 2, 2", entièrement fabriquée en bois, est particulièrement adaptée pour être installée sur des sols meubles, comme du sable ou de la vase, par exemple.

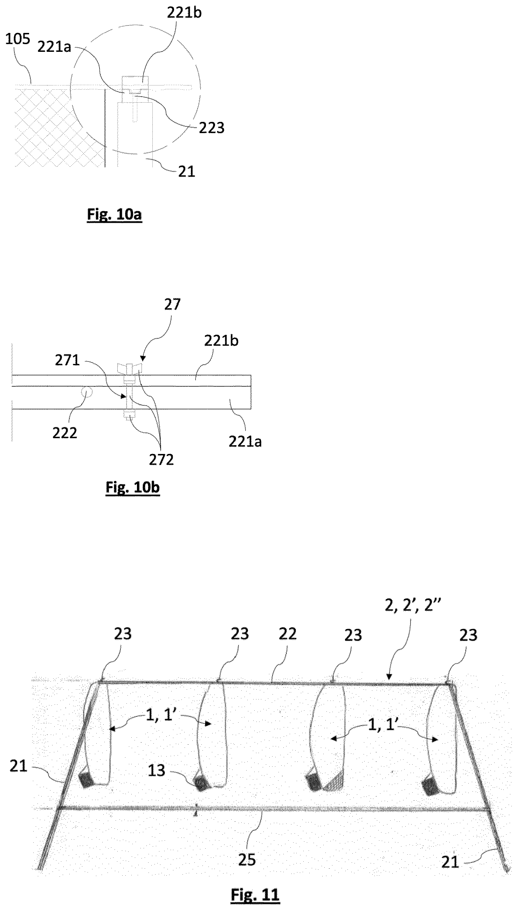

Dans encore une autre variante, illustrée sur les figures 9 et 10a, 10b, le support de suspension se présente sous la forme d'une autre table de suspension 2' fabriquée en bois et en matière plastique (ou l'un de ses dérivés, ci-après regroupé sous le terme général « plastique ») ayant une rigidité suffisante pour porter les contenants 1, 1' à huîtres. Comme précédemment, cette table de suspension 2' comprend des pieds 21, se présentant sous la forme de pieux en bois, enfoncés dans le sol à espace régulier et selon au moins deux rangées 211a, 211b, conformément à la description ci-dessus.

Dans cette variante, des barres supérieures 22' en plastique sont fixées sur l'extrémité libre des pieds 21. Plus précisément, chacune des barres supérieures 22' est constituée de deux demi-barres 221a, 221b (illustrées sur les figures 10a et 10b) sensiblement identiques (mais pouvant présenter une épaisseur différente par exemple). Dans cet exemple, les demi-barres 221a, 221b sont fixées sur l'extrémité libre des pieds 21 par une vis de fixation 223 et une rondelle (non visible mais par exemple en inox). Pour ce faire, la demi-barre 221a en contact avec le pied 21 en bois présente un perçage dans lequel est insérée la vis de fixation 223, de préférence en inox, qui est ensuite vissée dans le pied 21, comme illustré sur la figure 10a. On comprend bien évidemment que d'autres solution de fixation des barres supérieures 22' sur les pieds 21 sont envisageable sans s'écarter du principe général de l'invention.

Les demi-barres 221a, 221b présentent, sur leurs faces situées en vis-à-vis, des fentes, ou encoches, 222 qui sont par exemple usinées en forme de demi-cercle ou d'hameçon ouvert vers le haut. Ces encoches 222, d'environ 10 mm de diamètre par exemple, sont agencées de manière régulière (par exemple tous les 55 cm) et sont situées à des positions correspondantes le long des demi-barres 221a, 221b de sorte que, lorsque les demi-barres 221a, 221b sont assemblées, les encoches 222 forment ensemble un orifice circulaire configuré pour recevoir et maintenir l'axe de suspension 105 d'un contenant 1, 1' à huîtres. Ainsi, les encoches 222 des demi-barres 221a, 221b forment les moyens de réception 23 des contenants 1, 1' à huîtres.

Ainsi, pour installer des contenants 1, 1' sur une telle table de suspension 2', il est nécessaire :
- d'ouvrir/séparer les demi-barres 221a, 221b des deux barres supérieures 22',
- de disposer l'axe de suspension 105 des contenants 1, 1' dans les encoches correspondantes des barres supérieures 22, et
- de refermer/assembler les demi-barres 221a, 221b des deux barres supérieures 22' ensemble de sorte à ce que l'axe de support 105 du contenant 1, 1' soit emprisonné entre les demi-barres 221a, 221b.

Ainsi, les contenants 1, 1' à huîtres se retrouvent suspendues par leurs axes de suspension 105 entre les deux rangées 211a, 211b de pieds 21 et les barres supérieures 22'.

Afin de maintenir en position les demi-barres 221a ,221b entre-elles après assemblage, des deuxièmes moyens de verrouillage réversibles 27 peuvent être mis en oeuvre. Pour ce faire, il est possible de prévoir des perçages 271 traversant les deux demi-barres 221a, 221b qui sont configurés pour coopérer avec par exemple un boulon de fixation 272. Dans l'exemple illustré sur la figure 10b, le boulon de fixation 272 comprend un écrou à oreilles en inox, une rondelle en inox, une tige filetée en inox, une deuxième rondelle en inox et un écrou en inox. Le boulon de fixation 272 peut être remplacé par une goupille sécurisée, un cadenas ou tout autre dispositif permettant de verrouiller les demi-barres 221a ,221b ensemble, sans s'écarter du principe général de l'invention.

Dans cette variante, les barres de renfort 25 et les traverses 26 sont optionnelles.

Une telle table de suspension 2, combinant des pieds en bois et des barres supérieures en plastique, est particulièrement adaptée pour être installée sur des sols meubles, comme du sable ou de la vase, par exemple.

De plus, une table de suspension 2' de ce type présente une longévité/une durée de vie sensiblement plus élevée que les tables de suspension connues. En effet, ces tables permettent d'atteindre une durée de vie d'environ 20 ans à 30 ans. En outre, la matière plastique utilisée pour les barres supérieures 22' ne permet que très peu aux algues et coquillages de s'accrocher. Le plastique est outre sélectionné pour être facilement recyclable et présenter une adhérence très faible de sorte à ce que l'axe de suspension 105 en acier inoxydable contenant 1, 1' puisse tourner aisément et avec une usure quasi nulle. Ainsi, l'impact environnementale d'une telle table de suspension 2' est optimisé.

Les tables de suspension 2, 2' décrites ci-dessus en relation avec les différentes variantes et mettant en oeuvre des pieds 21 en bois sont capables de supporter de très fortes tempêtes. De plus, leur installation est relativement simple puisqu'il est possible choisir leur hauteur selon le type de parc dans lequel elles sont utilisées.

Par ailleurs, on comprend bien évidemment qu'il est possible de mettre en oeuvre un nombre supérieur de pieds et/ou de rangées de pieds, peu importe la variante de table de suspension décrite ci-dessus, de sorte à multiplier le nombre de barres de supérieures afin de suspendre un nombre plus important de contenants, sans s'écarter du principe général de l'invention.

De plus, du fait de l'intégration de l'axe de suspension 105 directement sur le contenant 1, il est possible de prévoir que la table de suspension 2 ne présente pas de barres transversales hautes de sorte à permettre le passage d'une machine de chargement et déchargement des contenants sur une remorque tractée ou sur un bateau, par exemple, de sorte à mécaniser/automatiser les opérations de chargement/déchargement des contenants à coquillages.

La figure 11 illustre un exemple de table de suspension 2, 2', 2" conforme à l'invention montrant les contenants 1, 1' conforme à l'invention en position repos, c'est-à-dire se tenant sensiblement verticalement. Cette position de repos est celle que peuvent prendre les contenants 1, 1' lorsque la marée est basse, par exemple.

La figure 12 illustre la même table de suspension 2, 2', 2" portant les mêmes contenants 1, 1' que sur la figure 11, dans laquelle les contenants 1, 1' sont en en position inclinée, c'est-à-dire qu'ils se tiennent selon un angle différent de la verticale. Cette position inclinée est celle que peuvent prendre les contenants 1, 1' lorsque la marée est haute, par exemple. Ce pivotement naturel des contenants 1, 1' est notamment permis par la mise en oeuvre de l'axe de rotation 105 et du flotteur 13 sur le contenant 1, 1'.

## Revendications

1. Contenant (1, 1') pour la culture de coquillages comprenant un maillage (11, 11') conformé de sorte à former un espace de réception (12) desdits coquillages, ledit contenant (1) se présentant sous la forme d'une poche (1) comprenant :
- une enveloppe souple (11) formant ledit maillage, ainsi
- qu'une armature (10) portant un axe de suspension (105) dudit contenant (1, 1') et un cintre (100), ledit cintre (100) étant disposé à l'intérieur de ladite enveloppe souple (11) et étant configuré pour conformer l'enveloppe souple (11) de sorte à former ledit espace de réception (12) desdits coquillages au sein de l'enveloppe souple (11), et ledit cintre (100) comprenant une embase (101) rectiligne à partir de laquelle s'étend un élément (102) en forme de U dont les montants latéraux (103b, 103c) sont courbés.

2. Contenant (1, 1') selon la revendication 1, **caractérisé en ce que** ledit axe de suspension (105) est fixé sur une surface extérieure dudit maillage (11, 11') et **en ce qu'**il est décalé par rapport à un plan comprenant le centre de gravité dudit contenant (1).

3. Contenant (1) selon l'une quelconque des revendications 1 et 2, selon lequel ledit axe de suspension (105) comprend au moins une tige circulaire (107a, 107b) formant un axe de rotation de la poche (1) à huîtres, ladite au moins une tige circulaire (107a, 107b) étant décalé par rapport à un bord extérieur de ladite enveloppe souple (11).

4. Contenant (1) selon l'une quelconque des revendications 1 à 3, selon lequel l'enveloppe 11 se présente sous la forme d'un tube avec une extrémité ouvrable, ladite extrémité présentant des moyens de fermeture réversibles (111) de l'enveloppe souple 11, lesdits moyens réversibles de fermeture (111) comprenant de préférence des crochets (112) montés sur un élastique (113).

5. Contenant (1) selon l'une des revendications 3 et 4, selon lequel ladite armature (100) est entièrement ou partiellement métallique et comprend des moyens de fixation dudit axe suspension (105) avec ledit cintre (100), ladite enveloppe souple (11) étant disposée entre ledit axe suspension (105) et ledit cintre (100).

6. Contenant (1, 1') selon l'une des revendications 1 à 5, selon lequel ledit contenant (1, 1') comprend au moins un flotteur (13) fixé sur au moins une surface extérieure dudit maillage (11, 11'), ledit flotteur (13) étant de préférence amovible.

7. Support de suspension (2, 2', 2") destiné à suspendre au moins un contenant (1) tel que défini selon l'une des revendications 1 à 7, ledit support de suspension (2, 2', 2") comprenant au moins quatre pieds (21) disposés selon au moins deux rangées parallèles (211a, 211b) et deux barres supérieures (22, 22') s'étendant sensiblement parallèlement auxdites rangées parallèles (211a, 211b), et lesdites barres supérieures (22, 22') étant chacune portées par au moins deux pieds (21) d'une même rangée (211a, 221b), lesdites barres supérieures (22, 22') comprenant au moins une paire de moyens de réception (23) et de maintien disposées en vis-à-vis sur chacune desdites barres supérieures (22, 22') de manière à pouvoir recevoir l'axe de suspension (105) d'un contenant (1) selon l'une des revendications 1 à 9, ledit support de suspension (2, 2', 2") étant exempt de barre transversale au niveau desdites barres supérieures (22).

8. Support de suspension (2, 2") selon la revendication 7, selon lequel lesdites barres supérieures (22) sont fabriquées en métal, et lesdits moyens de réception (23) comprennent au moins un crochet (231) soudé sur chacune desdites barres supérieures (22).

9. Support de suspension (2, 2") selon la revendication 7, **caractérisée en ce que** lesdites barres supérieures (22) sont fabriquées en bois et **en ce que** lesdits des moyens de réception (23) comprennent au moins un crochet (231) fixé sur chacune desdites barres supérieures (22).

10. Support de suspension (2, 2") selon l'une des revendications 7 à 9, comprenant des premiers moyens de verrouillage réversibles (24) desdits contenants (1) avec lesdits moyens de réception (23).

11. Support de suspension (2, 2") selon la revendication 7, selon lequel lesdites barres supérieures (22) sont fabriquées en plastique et en ce que lesdits des moyens de réception (23) comprennent au moins un crochet (231) fixé sur chacune desdites barres supérieures (22).

12. Support de suspension (2') selon la revendication 7, selon lequel lesdites au moins deux barres supérieures (22') sont chacune constituées de deux demi-barres (221a, 221b) présentant des fentes/encoches correspondantes qui, lorsque les demi-barres (221a, 221b) sont assemblées, forment lesdits moyens de réception (23) et de maintien d'au moins un contenant (1, 1') à coquillages.

13. Support de suspension (2') selon la revendication 12, selon lequel il comprend des deuxièmes moyens de verrouillage réversibles (27) desdites demi-barres (221a, 221b) entre-elles lorsqu'elles sont assemblées et qu'elles reçoivent lesdits contenants (1, 1').

14. Support de suspension (2, 2', 2") selon l'une des revendications 7 à 13, selon lequel il comprend en outre au moins une traverse (26) et/ou au moins une barre de renfort (25), ladite traverse (26) et/ou au moins une barre de renfort (25) étant fixée entre au moins deux pieds (21) à une distance de l'extrémité supérieure des pieds (21) au moins égale à la largeur (Ig) d'un contenant (1, 1').

15. Équipement d'élevage de coquillages en surélévation comprenant un support de suspension (2, 2', 2") tel que défini selon l'une quelconque des revendications 7 à 14 et au moins un contenant (1, 1') tel que défini selon l'une quelconque des revendications 1 à 6, ledit contenant (1, 1') étant suspendu audit support de suspension (2, 2', 2") de manière que l'axe de suspension (105) dudit contenant(1, 1') soit reçu par une paire de moyens de réception (23) disposées en vis-vis sur chacune des barres supérieures (22).

16. Utilisation de l'équipement tel que défini selon la revendication 15 en vue de la mécanisation/automatisation du chargement et du déchargement des contenants (1, 1') sur la table de suspension (2).
